# EUROPEAN PATENT APPLICATION

(11) **EP 0 849 302 A1**
(43) Date of publication of application: **24.06.1998**
(21) Application number: 97114002.5
(22) Date of filing: 13.08.1997
(51) Int. Cl.: C08G 59/14, C08J 9/00

(54) **Epoxy resin foam and method for its production**

(30) Priority: 20.12.1996 JP 354834/96
(71) Applicant: Asahi Fiber Glass Co., Ltd., Tokyo 101 (JP)
(72) Inventor: Inoue, Akira, Asahi Fiber Glass Company Ltd., Tokyo 101 (JP); Kojima, Masahiro, Asahi Fiber Glass Company Ltd., Tokyo 101 (JP)
(74) Representative: Wächtershäuser, Günter, Prof. Dr.

(57) **Abstract**

An epoxy resin foam having a resin skeleton, obtained by reacting 100 parts by weight of an epoxy resin having at least one epoxy group per molecule and from 5 to 50 parts by weight of at least one phosphoric acid selected from the group consisting of phosphoric acid, polyphosphoric acid and phenylphosphonic acid.

## Description

The present invention relates to a novel epoxy resin foam and a method for its production. More particularly, it relates to a highly rigid and uniform epoxy resin foam having fire retardancy and a method for producing such an epoxy resin foam, whereby foaming and curing can be carried out at room temperature.

Heretofore, various resin foams have been used as heat insulating materials or light weight part materials, and an epoxy resin has been used as incorporated to a resin foam for the purpose of modifying a thermoplastic resin foam or a polyurethane resin foam to improve the heat resistance, overcoming the brittleness of a phenolic resin foam, or capturing an acid catalyst used for curing a phenolic resin foam.

On the other hand, a foam employing an epoxy resin as a base material has been proposed to utilize characteristics of the epoxy resin, such as the bonding property with other materials and excellent heat resistance, chemical resistance, dimensional stability and mechanical strength.

For example, JP-A-50-76175 discloses a method for producing an epoxy resin foam, wherein a resin mixture comprising an epoxy resin, a certain specific tetraglycidyl ester, an inflating agent and a surfactant, is cured with a Lewis acid such as boron fluoride

Further, JP-A-1-197553 discloses that a foam can be obtained at room temperature by blending an epoxy resin, an amine-type curing agent, a curing accelerator and an inorganic filler.

JP-A-5-194780 discloses an intumescent resin composition which can be foamed by heating, obtained by blending an epoxy resin, a methacrylic resin having an average particle size of at most 300 µm, a polyethylene resin, a latent curing agent for epoxy resin, a decomposable blowing agent and a surfactant.

Still further, JP-A-5-186625 discloses a heat-foamable resin sheet comprising a liquid or semi-solid epoxy resin and a carbonate of an amine.

Thus, epoxy resin foams utilizing characteristics of epoxy resins have been widely used as joint fillers, sealants, or light weight parts for e.g. automobiles. In particular, when they are used as building materials represented by heat insulating materials or core materials for sandwich panels, it has been attempted to improve their fire retardancy by incorporating a fire retardant or an inorganic filler to such epoxy resin foams, since fire retardancy or self-extinguishing property is required for such building materials.

However, as is different from a case where a fire retardant or an inorganic filler is added to a molded product such as a fiber-reinforced plastic (FRP), in the case of a resin foam, the amount to be added is rather limited, since if a fire retardant or an inorganic filler is added in a large amount, the flowability of the resin during foaming tends to decrease, and the moldability into a predetermined shape tends to be poor, or the size or distribution of bubbles after foaming tends to be non-uniform, whereby the mechanical strength of the foam tends to be poor, although such may vary depending upon the nature or particle size of the fire retardant or inorganic filler to be added, and consequently, there has been a problem that the fire retardancy tends to be inadequate.

Accordingly, as a method for improving the fire retardancy or self-extinguishing property of a foam, it is considered preferred that a component which contributes to the fire retardancy or self-extinguishing property, be combined into the molecular structure of the resin constituting the foam.

Further, in the prior art disclosed in JP-A-50-76175, there has been also a problem that the amount of the Lewis acid as a curing catalyst is small relative to the epoxy resin, whereby it takes long time for foaming and curing, and heating is required for foaming and curing, and thus the productivity is low.

It is an object of the present invention to solve the above-mentioned drawbacks of the prior art and to present a highly rigid and uniform epoxy resin foam which has fire retardancy, and a method for producing such an epoxy resin foam, whereby foaming and curing can be carried out at room temperature in a short period of time without necessity for heating.

To accomplish the above object, the present invention provides an epoxy resin foam having a resin skeleton, obtained by reacting 100 parts by weight of an epoxy resin having at least one epoxy group per molecule and from 5 to 50 parts by weight of at least one phosphoric acid selected from the group consisting of phosphoric acid, polyphosphoric acid and phenylphosphonic acid, or from 5 to 50 parts by weight of a mixture comprising at least one phosphoric acid selected from the group consisting of phosphoric acid, polyphosphoric acid and phenylphosphonic acid, and at least one phosphoric acid compound selected from the group consisting of a phosphoric acid salt and a phosphoric acid ester, having one or more hydroxyl groups bonded to a phosphorus atom.

Further, to accomplish the above object, the present invention also provides a method for producing an epoxy resin foam, which comprises foaming and curing a mixture comprising the following components A to D in the following ratio:

| | | |
|---|---|---|
| A: | An epoxy resin having at least one epoxy group per molecule | 100 parts by weight |
| B: | At least one phosphoric acid selected from the group consisting of phosphoric acid, polyphosphoric acid and phenyl phosphonic acid | 5 to 50 parts by weight |
| | or | |
| B': | A mixture comprising at least one phosphoric acid selected from the group consisting of phosphoric acid, polyphosphoric acid and phenylphosphonic acid and at least one phosphoric acid compound selected from the group consisting of a phosphoric acid salt and a phosphoric acid ester, having one or more hydroxyl groups bonded to a phosphorus atom | 5 to 50 parts by weight |
| C: | A blowing agent | 1 to 50 parts by weight |
| D: | A foam stabilizer | 0.01 to 10 parts by weight |

Now, the present invention will be described in detail with reference to the preferred embodiments.

In the present invention, the epoxy resin is a compound having at least one epoxy group per molecule, or a compound which is capable of reacting with a curing agent for epoxy resin for curing. Such a compound is a compound so-called a rain agent of an epoxy resin, or a polyepoxide. As such an epoxy resin, a compound having a glycidyl group as an epoxy group, is preferred. Particularly preferred is a glycidyl ether type epoxy resin. However, the epoxy resin is not limited to such a preferred resin, and it is possible to use, for example, a cyclic aliphatic epoxy resin, a glycidyl ester type epoxy resin, a heterocyclic aliphatic epoxy resin, or a linear aliphatic epoxy resin (such an epoxy resin may be in the form of an oligomer). Further, one of such epoxy resins may be selected for use, or two or more of them may be used in combination.

As the epoxy resin, one which is liquid at room temperature, is preferred from the viewpoint of efficiency in mixing with a fire retardant and flowability during foaming. Such an epoxy resin may, for example, be a glycidyl ether type epoxy resin such as bisphenol A diglycidyl ether, bisphenol F diglycidyl ether, resorcinol diglycidyl ether, phenol novolak polyglycidyl ether, or cresol novolak polyglycidyl ether; a glycidyl ester type epoxy resin such as a glycidyl ester of hexahydrophthalic acid, or a glycidyl ester of dimer acid; or a cyclic aliphatic epoxy resin such as 3,4-epoxy-6-methylcyclohexylmethyl carboxylate, or 3,4-epoxycyclohexylmethyl carboxylate.

The phosphoric acid in the present invention is at least one member selected from the group consisting of phosphoric acid, polyphosphoric acid and phenylphosphonic acid. This phosphoric acid is a component which reacts with the above epoxy resin to form a skeleton of the resin foam and which at the same time impacts fire retardancy to the resin foam.

Among the above-mentioned phosphoric acids, phosphoric acid is not particularly limited and may be any phosphoric acid which is available for industrial use with a concentration of 75%, 85% or 89%.

Polyphosphoric acid is also commercially available in a variety of grades depending upon the content of P₂O₅, and it can be used without any particular restriction. Likewise, there is no particular restriction with respect to phenylphosphonic acid.

As such a phosphoric acid, at least one member from phosphoric acid, polyphosphoric acid and phenylphosphonic acid may be used. Namely, two or more of them may be used in combination. Among them, phenylphosphonic acid is solid and is accordingly preferably used in combination with phosphoric acid or polyphosphoric acid which is liquid, in order to facilitate flowability during foaming and curing.

The above phosphoric acid is believed to react with an epoxy group of the epoxy resin and be taken into the molecular skeleton of the epoxy resin. Accordingly, by controlling the amount of the phosphoric acid to a proper level, it is possible to make sure that the phosphoric acid will not remain as a free acid in the resulting foam. By controlling the amount in such a manner, even in a case where the epoxy resin foam of the present invention is bonded to other material such as a metal or wood, it will not be required to use a neutralizing agent to prevent corrosion of the metal or a color change of the wood.

On the other hand, the phosphoric acid quickly reacts with epoxy groups of the epoxy resin. Accordingly, as described hereinafter, the two will readily react simply by being mixed, to form a foam. However, in some cases, the calorific value tends to be too large due to the rapid reaction with epoxy groups, and depending upon the type of the blowing agent, foaming (vaporization) takes place all at once, whereby it tends to be difficult to obtain a uniform foam. In such a case, in order to control the reaction to suppress the calorific value, it is preferred to use at least one phosphoric acid compound selected from the group consisting of a phosphoric acid salt and a phosphoric acid ester, having one or more hydroxyl groups bonded to a phosphorus atom (hereinafter sometimes referred to simply as a phosphoric acid compound), in combination with the phosphoric acid.

In the present invention, by using the above phosphoric acid compound in combination, it is possible to control the reaction with epoxy groups to suppress the calorific value and thereby to produce a good foam. Such a phosphoric acid compound contains phosphorus and it thus is also a component which imparts fire retardancy to a resin foam. Accordingly, even when it is used in a relatively large amount to the above phosphoric acid, there will be little possibility of deteriorating the fire retardancy of the resulting resin foam.

In the above phosphoric acid compound, the hydroxyl group bonded to a phosphorus atom is required to be at least one in order to react with an epoxy group of the epoxy resin. Further, as such a phosphoric acid compound, at least one member of a phosphoric acid salt and a phosphoric acid ester may be used. Two or more phosphoric acid compounds may be used in combination.

The phosphoric acid salt may, for example, be ammonium dihydrogenphosphate, diammonium hydrogenphosphate, sodium dihydrogenphosphate, disodium hydrogenphosphate, potassium dihydrogenphosphate, dipotassium hydrogenphosphate, calcium dihydrogenphosphate, calcium monohydrogenphosphate, aluminum dihydrogenphosphate or dialuminum hydrogenphosphate. The above phosphoric acid ester may, for example, be monomethyl phosphate, dimethyl phosphate, monoethyl phosphate, diethyl phosphate, monopropyl phosphate, monoisopropyl phosphate, monobutyl phosphate, monolauryl phosphate, monostearyl phosphate, mono-2-ethylhexyl phosphate or monoisodecyl phosphate.

In the present invention, the above phosphoric acid is used in an amount of from 5 to 50 parts by weight per 100 parts by weight of the epoxy resin. If the amount of the phosphoric acid is less than 5 parts by weight, crosslinking of the epoxy resin tends to be inadequate, and the resulting foam will not have adequate rigidity, or the heat of reaction generated by the reaction with the epoxy resin tends to be little, and foaming (vaporization) of the blowing agent tends to be inadequate, whereby it will be difficult to obtain a foam having a desired expansion ratio. On the other hand, if the amount of the phosphoric acid exceeds 50 parts by weight, the phosphoric acid tends to be excessive, and its proportion remaining in the form of a free acid in the foam tends to be high. In such a case, the foamed state of the foam tends to be poor, and if such a foam is in contact with a metal or wood, it is likely to bring about corrosion or color change of such a metal or wood.

Further, the amount of the phosphoric acid is preferably adjusted depending upon the particular application of the foam, the method for its production or the condition for the production. For example, in a case where it is not desirable that the phosphoric acid remains in the form of a free acid, it is preferred to use a relatively small amount within the above range, and in a case where the calorific value by the reaction is inadequate, it is preferred to use a relatively large amount within the range.

In a case where the above-mentioned phosphoric acid compound is used, the amount of the mixture thereof with the phosphoric acid (hereinafter sometimes referred to simply as the mixture of the phosphoric acid, etc.) is preferably from 5 to 50 parts by weight per 100 parts by weight of the epoxy resin. The amount of the phosphoric acid compound relative to the phosphoric acid can be adjusted depending upon the particular application of the foam, the method for its production or the condition for the production, like in the above case. For example, it may suitably be adjusted to attain a proper calorific value or to attain a proper foaming and curing time.

The proportion of the phosphoric acid in the above mixture of the phosphoric acid, etc. is not particularly limited, but is usually preferably at least 40 wt%. If the amount of the phosphoric acid is too small, the reactivity with the epoxy resin may sometimes be inadequate. In a case where a solid phosphoric acid compound is used, it is preferred to use phosphoric acid or polyphosphoric acid which is liquid, in combination therewith, to facilitate flowability during foaming and curing.

As the blowing agent to be used in the present invention, conventional blowing agents may be mentioned such as halogenated hydrocarbons or hydrocarbons. Among them, halogenated hydrocarbons having a boiling point of from 0 to 100°C are preferred. Particularly preferred are halogenated hydrocarbons which are liquid at room temperature. These blowing agents may be used alone or in combination as a mixture of two or more of them.

The halogenated hydrocarbons include, for example, chlorinated hydrocarbons such as methylene chloride and trichloroethylene; chlorofluorinated hydrocarbons such as 2,2-dichloro-1,1,1-trifluoroethane (HCFCl23), 1,1-dichloro-1-fluoroethane (HCFCl41b), 1,1-dichloro-2,2,3,3,3-pentafluoropropane (HCFC225ca), and 1,3-dichloro-1,1,2,2,3-pentafluoropropane (HCFC225cb); and fluorinated hydrocarbons such as 1,1,1,2,3,3-hexafluoropropane (HFC236ea), and 1,1,1,3,3-pentafluoropropane (HFC245fa).

In the present invention, the above blowing agent is used usually in an amount of from 1 to 50 parts by weight per 100 parts by weight of the epoxy resin. If the amount is less than 1 part by weight, foaming tends to be inadequate, and if it exceeds 50 parts by weight, open cells tend to increase, and closed cells tend to decrease, whereby the rigidity or heat insulating property of the foam tends to deteriorate.

Further, the expansion ratio and density of the foam will change by an increase or decrease of the amount of the blowing agent. Therefore,it is preferred to adjust the amount of the blowing agent depending upon the particular application of the foam so that the required foam density can be obtained.

As the foam stabilizer to be used in the present invention, conventional stabilizers may be mentioned which are commonly used for the production of various resin foams such as polyurethane resin foams or phenolic resin foams.

As such a foam stabilizer, a surfactant is preferred. As such a surfactant, a nonionic surfactant is more preferred. These foam stabilizers may be used alone or in combination as a mixture of two or more of them.

Nonionic surfactants useful as such a foam stabilizer include, for example, sorbitan esters such as sorbitan monostearate, sorbitan monooleate, polyoxyethylene sorbitan monostearate, and polyoxyethylene sorbitan monooleate; polyethylene glycol esters such as polyethylene glycol monostearate, polyethylene glycol monooleate, polyethylene glycol distearate, and polyethylene glycol dioleate, polyoxyethylene alkyl ethers; polyoxyethylene alkyl esters; polyoxyethylene alkylphenyl ethers; polyoxyethylene alkylphenyl esters; and dimethylpolysiloxane polyoxy alkylene copolymers.

In the present invention, such a foam stabilizer is used usually in an amount of from 0.01 to 10 parts by weight, preferably from 0.5 to 5 parts by weight, per 100 parts by weight of the epoxy resin. If the amount is less than 0.01 part by weight, the effect for unifying the distribution or the size of bubbles after foaming tends to be inadequate, and if it exceeds 10 parts by weight, it tends to act as a plasticiser and is likely to lower the rigidity of the foam.

In the present invention, a filler or a pigment may be used for controlling the flowability during foaming and curing or for economical efficiency. As such a filler or a pigment, calcium carbonate, talc, kaolin, bentonite, mica, sericite, zeolite, silica, silicafume, silica sand, perlite, shirasubaloons, titanium oxide, carbon black, or phthalocyanine, may, for example, be mentioned. The type and amount of such a filler or pigment are selected as the case requires, and it is mixed to an epoxy resin or the like by e.g. a kneader, a mixing roll or a Henschel mixer for use.

The epoxy resin and the phosphoric acid or the mixture of the phosphoric acid, etc. usually react at room temperature. Accordingly, in the method for producing an epoxy resin foam according to the present invention, it is preferred to mix the epoxy resin and the phosphoric acid or the mixture of the phosphoric acid, etc. at room temperature to obtain a reactive mixture. However, in a case where the epoxy resin is a highly viscous liquid, mixing of the epoxy resin and the phosphoric acid or the mixture of the phosphoric acid, etc. may be carried out under heating.

When these two are mixed, the blowing agent and the foam stabilizer may simultaneously be mixed. However, the blowing agent or the foam stabilizer may preliminarily be mixed to at least one of the two. In such a case, from the efficiency for mixing, it is preferred to preliminarily mixing them to a component containing the epoxy resin to obtain a preliminary mixture and to mix this preliminary mixture with a component containing the phosphoric acid or the mixture of the phosphoric acid, etc. to obtain a reactive mixture.

The reactive mixture comprising the epoxy resin, the phosphoric acid or the mixture of the phosphoric acid, etc., the blowing agent and the foam stabilizer, is able to initiate the reaction at room temperature and undergoes foaming due to vaporization of the blowing agent as the reaction proceeds with heat generation, followed by reaction curing, to form an epoxy resin foam. As an apparatus for mixing these components and discharging or injection such a mixture, it is preferred to use a mixing apparatus so-called a multi-component mixing-foaming machine which is commonly used for the production of polyurethane resin foams.

As a method for shaping the epoxy resin foam of the present invention into a desired shape, it is possible to employ a foam molding method wherein the above starting material components are mixed and cast into a mold having a desired size and shape, followed by foaming and curing, or a slab foaming method wherein the above starting material components are mixed and cast on a flat surface, and before the mixture hardens, the surface of the mixture in the course of foaming and curing is scraped by e.g. a doctor blade to a predetermined thickness, followed by curing.

The epoxy resin foam obtained by the present invention can be used for the game applications as conventional resin foams. For example, it may be used for applications in which a foam obtained by a slab foaming method is cut out into a desired shape and used as a board-shaped heat insulating material to be used for buildings such as houses, such as a heat insulating and formworking material or an underfloor heat insulating material, or it may be used for applications in which it is foamed by a foam molding method between an inner wall and an outer wall of a structure such as a refrigerator to form a heat insulating material. Further, it can be used as a core material for a door or a sandwich panel. Furthermore, a mixture of the above-described starting material components is impregnated into a reinforced fiber such as a glass fiber, followed by foaming and curing to obtain a composite material such as a synthetic lumber material.

The mixture of the epoxy resin with the phosphoric acid or with the mixture of the phosphoric acid, etc. rapidly undergoes a reaction at room temperature to generate heat, and by utilizing this heat of reaction for vaporization of a blowing agent, the mixture of the epoxy resin with the phosphoric acid or with the mixture of the phosphoric acid, etc. can readily and quickly be cured at room temperature without heating, to obtain an epoxy resin foam.

Further, the phosphoric acid reacts and is taken into the resin skeleton constituting the epoxy resin foam, whereby an epoxy resin foam having high fire retardancy will be obtained wherein the phosphoric acid functions in the same manner as a reactive fire retardant.

Now, the present invention will be described in further detail with reference to Examples. However, it should be understood that the present invention is by no means restricted to such specific Examples.

### EXAMPLE 1

2 Parts by weight of polyoxyethylene sorbitan monostearate was added as a foam stabilizer to 100 parts by weight of a mixture obtained by mixing a bisphenol A diglycidyl ether type epoxy resin having an epoxy equivalent of 180 g/eq and an o-cresol novolak type epoxy resin having an epoxy equivalent of 195 g/eq and a molecular weight of about 700 in a weight ratio of 1:1, to obtain component X, which was put into a feed material tank of a multi-component mixing-foaming machine, Then, 85% phosphoric acid for industrial use, designated as component Y, was put into a separate feed material tank. Then, 1,1-dichloro-1-fluoroethane as a blowing agent, designated as component Z, was put into still another feed material tank. Components X, X and Z were introduced in a discharge weight ratio of X:Y:Z = 100:30:10 in a total flow rate of 3 kg/min into a mixing head, and a reactive mixture was discharged. 1,250 g of this reactive mixture was immediately cast into a metal frame of 500×500×100 mm at room temperature, whereupon foaming started 15 seconds after the casting, and foaming and curing were completed 3 minutes and 30 seconds after the casting.

### EXAMPLE 2

0.5 Part by weight of a dimethylpolysiloxane polyoxyalkylene copolymer was added as a foam stabilizer to 100 parts by weight of a phenol novolak polyglycidyl ether type epoxy resin having an epoxy equivalent of 175 g/eq and a molecular weight of about 600, to obtain component X, which was put into a feed material tank of a multi-component mixing-foaming machine. Then, 89% phosphoric acid for industrial use and aluminum dihydrogen phosphate were mixed in a weight ratio of 4:1, to obtain component Y, which was put into a separate feed material tank. Then, methylene chloride and 1,1-dichloro-2,2,3,3,3-pentafluocopropane were mixed in a weight ratio of 4:1 as a blowing agent, to obtain component Z, which was put into still another feed material tank. Components X, Y and Z were introduced in a discharge weight ratio of X:Y:Z = 100:45:15 in a total flow rate of 3 kg/min into a mixing head, and a reactive mixture Was discharged. 1,250 g of this reactive mixture was immediately cast into a metal frame of 500×500×100 mm at room temperature, whereupon foaming started 30 seconds after the casting, and foaming and curing were completed four minutes and 30 seconds after the casting.

### EXAMPLE 3

0.5 Part by weight of a dimethylpolysiloxane polyoxyalkylene copolymer Was added as a foam stabilizer to 100 parts by weight of a phenol novolak polyglycidyl ether type epoxy resin having an epoxy equivalent of 175 g/eq and a molecular weight of about 600, to obtain component X, which was put into a feed material tank of a multi-component mixing-foaming machine. Then, 89% phosphoric acid for industrial use and 76%, as calculated as P₂O₅, of polyphosphoric acid were mixed in a weight ratio of 4:1, to obtain component Y, which was put into a separate feed material tank. Then, 1,1-dichloro-1-fluoroethane as a blowing agent, designated as component Z, was put into still another feed material tank. Components X, Y and Z were introduced in a discharge weight ratio of X:Y:Z = 100:5.5:10 in a total flow rate of 3 kg/min into a mixing head, and a reactive mixture was discharged. 1,250 g of this reactive mixture was immediately cast into a metal frame of 500×500×100 mm at room temperature, whereupon foaming started 45 seconds after the casting, and foaming and curing were completed five minutes after the casting.

### EXAMPLE 4

0.5 Part by weight of a dimethylpolysiloxane polyoxyalkylene copolymer was added as a foam stabilizer to 100 parts by weight of a phenol novolak polyglycidyl ether type epoxy resin having an epoxy equivalent of 175 g/eq and a molecular weight of about 600, to obtain component X, which was put into a feed material tank of a multi-component mixing-foaming machine. Then, 89% phosphoric acid for industrial use and monomethylphosphate were mixed in a Weight ratio of 3:1 to obtain component Y, which was put into a separate feed material tank. Then, 1,1-dichloro-1-fluoroethane as a blowing agent designated as component Z, was put into still another feed material tank. Components X, Y and Z were introduced in a discharge Weight ratio of X:Y:Z = 100:25:10 in a total flow rate of 3 kg/min into a mixing head, and a reactive mixture was discharged. 1,250 g of this reactive mixture was cast into a metal frame of 500×500×100 mm at room temperature, whereupon foaming started 30 seconds after the casting, and foaming and curing were completed five minutes after the casting.

### COMPARATIVE EXAMPLE 1

2 Parts of polyoxyethylene sorbitan monostearate was added as a foam stabilizer to 100 parts by weight of a mixture prepared by mixing a bisphenol A diglycidyl ether type epoxy resin having an epoxy equivalent of 180 g/eq and an o-cresol novolak type epoxy resin having an epoxy equivalent of 195 g/eq and a molecular weight of about 700 in a weight ratio of 1:1, to obtain component X, which was put into a feed material tank of a multi-component mixing-foaming machine. Then, triethylenediamine as a curing agent, designated as component Y, was put into a separate feed material tank. Then, 1,1-dichloro-1-fluoroethane as a blowing agent, designated as component Z, was put into still another feed material tank. Components X, Y and Z were introduced in a discharge weight ratio of X:Y:Z = 100:40:10 in a total flow rate of 3 kg/min into a mixing head, and a reactive mixture was discharged. 1,125 g of this reactive mixture was immediately cast into a metal frame of 500×500×100 mm at room temperature, whereupon foaming started 2 minutes after the casting, and foaming and curing were completed five minutes after the casting.

### COMPARATIVE EXAMPLE 2

100 Parts of a bisphenol A diglycidyl ether type epoxy resin having an epoxy equivalent of 180g/eq, 2 parts by weight of polyoxyethylene sorbitan monostearate as a foam stabilizer, 10 parts by weight of azobisisobutyronitrile as a decomposable blowing agent, 1 part by weight of zinc stearate as a foaming accelerator and 15 parts by weight of triethylenetetramine as a curing agent, were mixed and stirred. Then, 1,250 g of the mixture was cast into a metal frame of 500×500×100 mm, and heat foaming was carried out at 150°C for 30 minutes.

### COMPARATIVE EXAMPLE 3

2 Parts of a dimethylpolysiloxane polyoxyalkylene copolymer was added as a foam stabilizer to 100 parts by weight of a bisphenol A diglycidyl ether type epoxy resin having an epoxy equivalent of 180 g/eq, to obtain component X, which was put into a feed material tank of a multi-component mixing-foaming machine. Then, toluenediisocyanate as a curing agent and 1,1-dichloro-1-fluoroethane as a blowing agent were mixed in a weight ratio of 4:1 to obtain component Y, which was put into a separate feed material tank. Components X and Y were introduced in a discharge weight ratio of X:Y = 100:50 in a total flow rate of 3 kg/min into a mixing head, and a reactive mixture was discharged. 1,250 g of this reactive mixture was immediately cast into a metal frame of 500×500×100 mm at room temperature, whereupon foaming started 1 minute after the casting, and foaming and curing were completed three minutes after the casting.

### COMPARATIVE EXAMPLE 4

0.5 Part by weight of a dimethylpolysiloxane polyoxyalkylene copolymer was added as a foam stabilizer to 100 parts by weight of a phenol novolak polyglycidyl ether type epoxy resin having an epoxy equivalent of 175 g/eq and a molecular weight of about 600, to obtain component X, which was put into a feed material tank of a multi-component mixing-foaming machine. Then, 89% phosphoric acid for industrial use, designated as component Y, was put into a separate feed material tank. Then, 1,1-dichloro-1-fluoroethane as a blowing agent, designated as component Z, was put into still another feed material tank. Components X, Y and Z were introduced in a discharge weight ratio of X:Y:Z = 100:65:10 in a total flow rate of 3 kg/min into a mixing head, and a reactive mixture was discharged. 1,250 g of this reactive mixture was immediately cast into a metal frame of 500×500×100 mm at room temperature, whereupon foaming started 30 seconds after the casting, but after foaming to a predetermined size, the product underwent shrinkage, and a foam having a predetermined size was not obtained.

### COMPARATIVE EXAMPLE 5

0.5 Part by weight of a dimethylpolysiloxane polyoxyalkylene copolymer was added as a foam stabilizer to 100 parts by weight of a phenol novolak polyglycidyl ether type epoxy resin having an epoxy equivalent of 175 g/eq and a molecular weight of about 600, to obtain component X, which was put into a feed material tank of a multi-component mixing-foaming machine. Then, 89% phosphoric acid for industrial use and 76%, as calculated as P₂O₅, of polyphosphoric acid were mixed in a weight ratio of 4:1 to obtain component Y, which was put into a separate feed material tank. Then, 1,1-dichloro-1-fluoroethane as a blowing agent, designated as component Z, was put into still another feed material tank. Components X, Y and Z were introduced in a discharge weight ratio of X:Y:Z = 100:3.5:10 in a total flow rate of 3 kg/min into a mixing head, and a reactive mixture was discharged. 1,250 g of this reactive mixture was immediately cast into a metal frame of 500×500×100 mm at room temperature, but no foaming was observed and a foam was not obtained.

The physical properties of the foams obtained by the foregoing Examples and Comparative Examples are shown in Table 1.

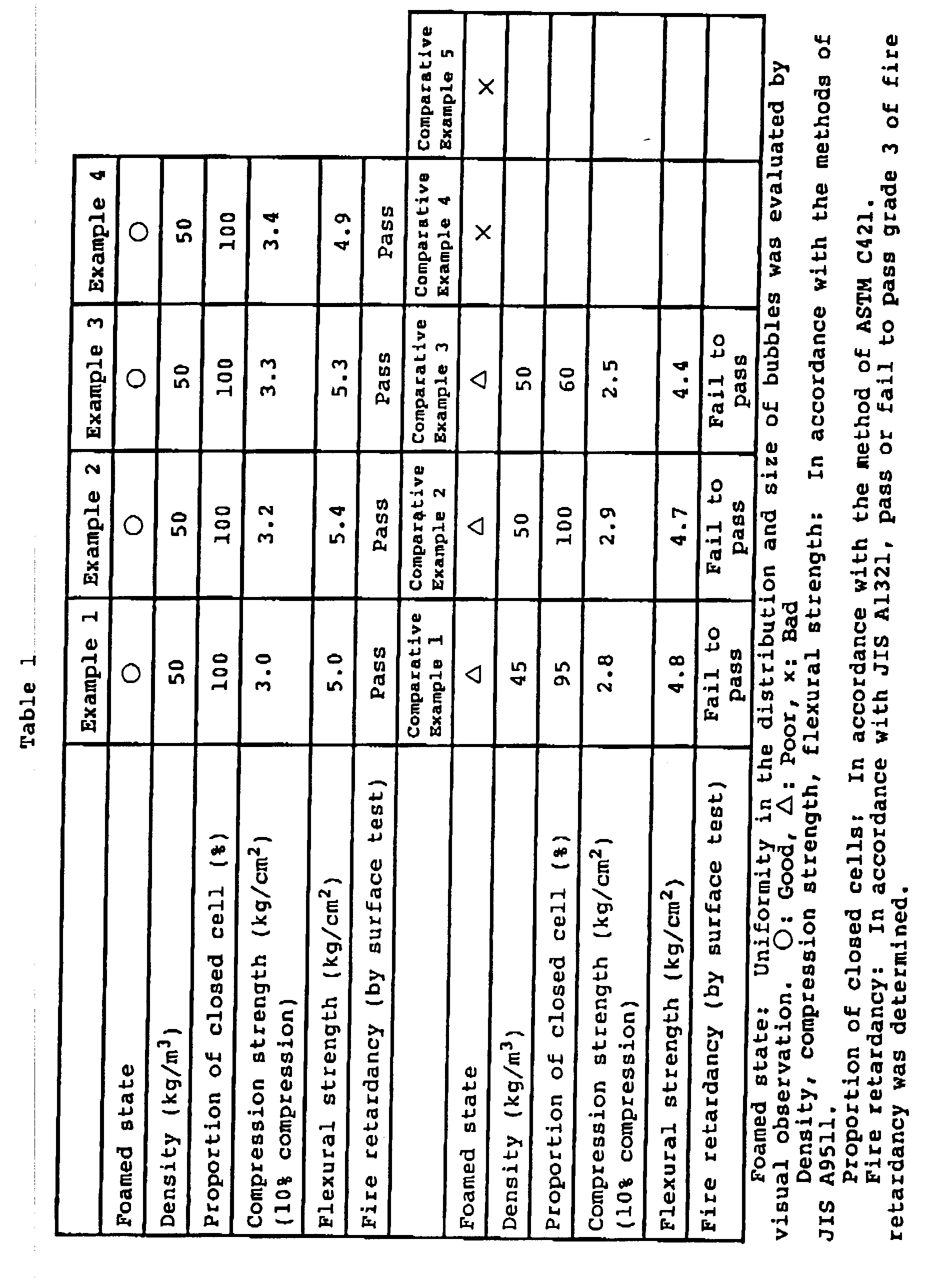

As shown by the foregoing Examples, according to the method for producing an epoxy resin foam of the present invention, foaming and curing can be simply and quickly carried out at room temperature to obtain a highly rigid and uniform epoxy resin foam having fire retardancy.

The epoxy resin foam of the present invention has the phosphoric acid taken into the resin skeleton constituting the foam and thus is excellent in fire retardancy.

## Claims

1. An epoxy resin foam having a resin skeleton, obtained by reacting 100 parts by weight of an epoxy resin having at least one epoxy group per molecule and from 5 to 50 parts by weight of at least one phosphoric acid selected from the group consisting of phosphoric acid, polyphosphoric acid and phenylphosphonic acid.

2. An epoxy resin foam having a resin skeleton, obtained by reacting 100 parts by weight of an epoxy resin having at least one epoxy group per molecule and from 5 to 50 parts by weight of a mixture comprising at least one phosphoric acid selected from the group consisting of phosphoric acid, polyphosphoric acid and phenylphosphonic acid, and at least one phosphoric acid compound selected from the group consisting of a phosphoric acid salt and a phosphoric acid ester, having one or more hydroxyl groups bonded to a phosphorus atom.

3. The epoxy resin foam according to Claim 1 or 2, wherein the epoxy resin is at least one member selected from the group consisting of a glycidyl ether type epoxy resin, a glycidyl ester type epoxy resin and a cyclic aliphatic epoxy resin.

4. A method for producing an epoxy resin foam, which comprises foaming and curing a mixture comprising the following components A to D in the following ratio:
| | | |
|---|---|---|
| A: | An epoxy resin having at least one epoxy group per molecule | 100 parts by weight |
| B: | At least one phosphoric acid selected from the group consisting of phosphoric acid, polyphosphoric acid and phenyl phosphonic acid | 5 to 50 parts by weight |
| C: | A blowing agent | 1 to 50 parts by weight |
| D: | A foam stabilizer | 0.01 to 10 parts by weight |

5. A method for producing an epoxy resin foam, which comprises foaming and curing a mixture comprising the following components A to D in the following ratio:
| | | |
|---|---|---|
| A: | An epoxy resin having at least one epoxy group per molecule | 100 parts by weight |
| B': | A mixture comprising at least one phosphoric acid selected from the group consisting of phosphoric acid, polyphosphoric acid and phenylphosphonic acid and at least one phosphoric acid compound selected from the group consisting of a phosphoric acid salt and a phosphoric acid ester, having one or more hydroxyl groups bonded to a phosphorus atom | 5 to 50 parts by weight |
| C: | A blowing agent | 1 to 50 parts by weight |
| D: | A foam stabilizer | 0.01 to 10 parts by weight |

6. The method for producing an epoxy resin foam according to Claim 4 or 5, wherein the epoxy resin is at least one member selected from the group consisting of a glycidyl ether type epoxy resin, a glycidyl ester type epoxy resin and a cyclic aliphatic epoxy resin.
